# DEMANDE DE BREVET EUROPEEN

(11) **EP 2 014 507 A1**
(43) Date de publication de la demande: **14.01.2009**
(21) Numéro de dépôt: 08290655.3
(22) Date de dépôt: 03.07.2008
(51) Int. Cl.: B60N 2/48

(54) **Dispositif d'anti-extraction d'un appui-tête de siège de véhicule automobile**

(30) Priorité: 09.07.2007 FR 0704965
(71) Demandeur: Centre d'etude et de recherche pour l'automobile, 51100 Reims (FR)
(72) Inventeur: Le Gall, François, 02130 Coulonges (FR); Bonfils, Xavier, 51100 Reims (FR)
(74) Mandataire: Sayettat, Julien Christian

(57) **Abrégé**

L'invention concerne un dispositif (1) d'anti-extraction d'un appui-tête de siège de véhicule automobile, comprenant un moyen de déverrouillage (7) comprenant une surface de came (8) et un organe d'actionnement (9) disposé en extrémité supérieure dudit moyen de déverrouillage, au dessus de ladite surface de came, l'activation dudit organe provoquant un déplacement de ladite surface de came, ledit organe d'actionnement étant activable par un appui vertical exercé vers le bas.

## Description

L'invention concerne un dispositif d'anti-extraction d'un appui-tête de siège de véhicule automobile.

Il est connu, notamment du document EP-0 942 845 de réaliser un dispositif d'anti-extraction d'un appui-tête de siège de véhicule automobile, ceci notamment afin d'éviter une projection de l'appui-tête à travers l'habitacle en cas d'accident, ledit appui-tête comprenant un coussin dont est issue une tige de montage en coulissement, ledit dispositif comprenant :
- ladite tige pourvue d'un cran d'anti-extraction disposé à proximité de son extrémité inférieure, ce qui évite une fragilisation de ladite tige dans la zone sollicitée en cas de choc de la tête contre l'appui-tête,
- une gaine de réception en coulissement de ladite tige dans le dossier dudit siège,
- un moyen de réception de ladite gaine dans ledit dossier, par exemple sous forme de douille destinée à être soudée à l'armature de dossier,
- un ressort en U monté sur ladite gaine de sorte que sa partie centrale soit contrainte en appui vers ladite tige par action élastique des bras dudit ressort, ladite partie centrale étant agencée pour pouvoir s'engager dans ledit cran et réaliser un verrouillage anti-extraction dudit appui-tête,
- un moyen de déverrouillage comprenant une surface de came coopérant avec ladite partie centrale,
- un organe d'actionnement disposé en extrémité supérieure dudit moyen de déverrouillage, au dessus de ladite surface de came, l'activation dudit organe provoquant un déplacement de ladite surface de came repoussant ladite partie centrale hors dudit cran à l'encontre de l'action élastique desdits bras, afin de permettre une extraction de l'appui-tête.

De façon connue, l'organe d'actionnement est activable par une traction vers le haut, cette réalisation ne présentant pas une ergonomie optimale pour l'utilisateur.

L'invention a pour but de pallier cet inconvénient.

A cet effet, l'invention propose un dispositif d'anti-extraction d'un appui-tête de siège de véhicule automobile, ledit appui-tête comprenant un coussin dont est issue une tige de montage en coulissement, ledit dispositif comprenant :
- ladite tige pourvue d'un cran d'anti-extraction disposé à proximité de son extrémité inférieure,
- une gaine de réception en coulissement de ladite tige dans le dossier dudit siège,
- un moyen de réception de ladite gaine dans ledit dossier,
- un ressort en U monté sur ladite gaine de sorte que sa partie centrale soit contrainte en appui vers ladite tige par action élastique des bras dudit ressort, ladite partie centrale étant agencée pour pouvoir s'engager dans ledit cran et réaliser un verrouillage anti-extraction dudit appui-tête,
- un moyen de déverrouillage comprenant une surface de came coopérant avec ladite partie centrale,
- un organe d'actionnement disposé en extrémité supérieure dudit moyen de déverrouillage, au dessus de ladite surface de came, l'activation dudit organe provoquant un déplacement de ladite surface de came repoussant ladite partie centrale hors dudit cran à l'encontre de l'action élastique desdits bras,
ledit organe d'actionnement étant activable par un appui vertical exercé vers le bas.

Dans cette description, les termes de positionnement dans l'espace (haut, bas, supérieur, inférieur, avant, arrière, vertical, horizontal, dessus, dessous,...) sont pris en référence au dispositif disposé dans le véhicule.

L'agencement proposé permet d'améliorer l'ergonomie d'extraction de l'appui-tête par l'utilisateur.

D'autres particularités et avantages de l'invention apparaîtront dans la description qui suit, faite en référence aux figures jointes dans lesquelles :

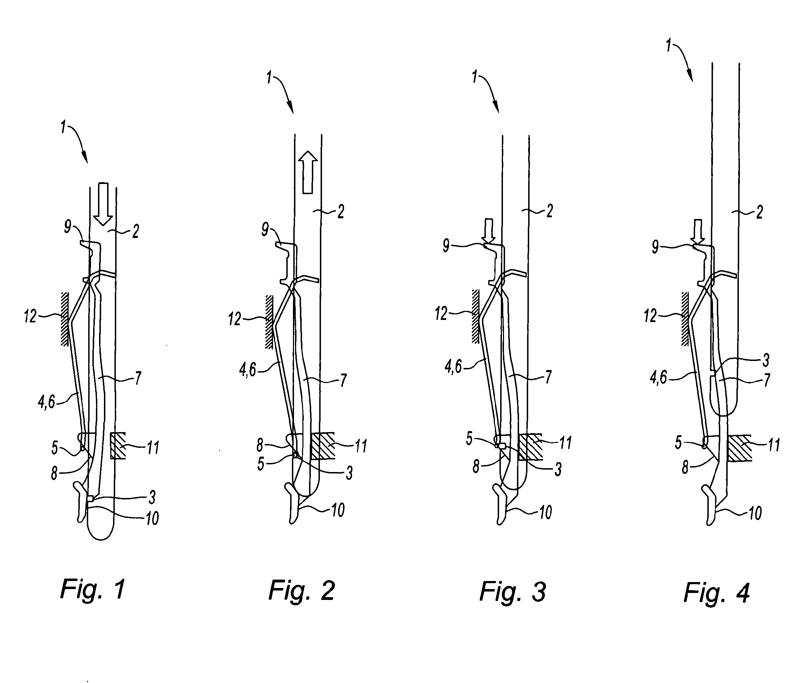

- la figure 1 est une vue schématique partielle de côté d'un dispositif selon un mode de réalisation, la tige étant en configuration de coulissement dans la gaine,
- la figure 2 est une vue analogue à celle de la figure 1, la partie centrale du ressort étant engagée dans le cran anti-extraction,
- la figure 3 est une vue analogue à celle de la figure 1, l'organe d'actionnement étant activé de sorte que la partie centrale du ressort soit dégagée du cran anti-extraction,
- la figure 4 est une vue analogue à celle de la figure 1, la tige étant en cours d'extraction de la gaine après que la partie centrale du ressort ait été dégagée du cran anti-extraction,

En référence aux figures, on décrit un dispositif 1 d'anti-extraction d'un appui-tête de siège de véhicule automobile, ledit appui-tête comprenant un coussin, non représenté, dont est issue une tige 2 de montage en coulissement, ledit dispositif comprenant :
- ladite tige pourvue d'un cran 3 d'anti-extraction disposé à proximité de son extrémité inférieure,
- une gaine, non représentée, de réception en coulissement de ladite tige dans le dossier dudit siège,
- un moyen de réception 12, représenté partiellement, de ladite gaine dans ledit dossier, par exemple sous forme de douille destinée à être soudée à l'armature du dossier,
- un ressort 4 en U monté sur ladite gaine de sorte que sa partie centrale 5 soit contrainte en appui vers ladite tige par action élastique des bras 6 dudit ressort, ladite partie centrale étant agencée pour pouvoir s'engager dans ledit cran et réaliser un verrouillage anti-extraction dudit appui-tête,
- un moyen de déverrouillage 7 comprenant une surface de came 8 coopérant avec ladite partie centrale,
- un organe d'actionnement 9 disposé en extrémité supérieure dudit moyen de déverrouillage, au dessus de ladite surface de came, l'activation dudit organe provoquant un déplacement de ladite surface de came repoussant ladite partie centrale hors dudit cran à l'encontre de l'action élastique desdits bras,
ledit organe d'actionnement étant activable par un appui vertical exercé vers le bas.

Les bras 6 sont recourbés de sorte à être en appui contre le moyen de réception 12.

Le moyen de déverrouillage 7 comprend en outre, disposé en dessous de la surface de came 8, un patin 10 de glissement contre la tige 2, ledit patin se trouvant en dessous de l'extrémité inférieure de ladite tige lorsque le cran 3 est disposé en regard de la partie centrale 5 du ressort 4 de sorte à permettre, sous l'action des bras 6 dudit ressort, un basculement dudit moyen de déverrouillage entraînant un mouvement en débattement de ladite surface de came, perpendiculairement à ladite tige, permettant un engagement de ladite partie centrale dans ledit cran.

Un tel patin 10, notamment en matière plastique, permet d'éviter un frottement de la partie centrale 5 du ressort 4 contre la tige 2, ce qui évite l'abrasion de ladite tige.

La gaine comprend une butée 11 arrêtant le mouvement en débattement de la surface de came 8 une fois la partie centrale 5 engagée dans le cran 3, l'activation de l'organe d'actionnement 9, par appui vertical vers le bas, induisant un couiissement du moyen de déverrouillage 7 contre ladite butée, ladite surface de came repoussant ladite partie centrale hors dudit cran à l'encontre de l'action élastique des bras 6 du ressort 4.

Un tel agencement permet à l'utilisateur de procéder à l'extraction de l'appui-tête.

Bien entendu, avec un tel agencement, lorsque l'organe d'actionnement 9 n'est plus activé, c'est à dire lorsque l'utilisateur cesse d'appuyer vers le bas, on observe un retour dudit organe dans sa position initiale, les bras 6 du ressort 4 créant un appui de la partie centrale 5 sur la surface de came 8, ce qui a pour effet d'induire un mouvement vers le haut du moyen de déverrouillage 7 et de l'organe d'actionnement 9 qui en fait partie.

## Revendications

1. Dispositif (1) d'anti-extraction d'un appui-tête de siège de véhicule automobile, ledit appui-tête comprenant un coussin dont est issue une tige (2) de montage en coulissement, ledit dispositif comprenant :
• ladite tige pourvue d'un cran (3) d'anti-extraction disposé à proximité de son extrémité inférieure,
• une gaine de réception en coulissement de ladite tige dans le dossier dudit siège,
• un moyen de réception (12) de ladite gaine dans ledit dossier,
• un ressort (4) en U monté sur ladite gaine de sorte que sa partie centrale (5) soit contrainte en appui vers ladite tige par action élastique des bras (6) dudit ressort, lesdits bras étant recourbés de sorte à être en appui contre ledit moyen de réception, ladite partie centrale étant agencée pour pouvoir s'engager dans ledit cran et réaliser un verrouillage anti-extraction dudit appui-tête,
• un moyen de déverrouillage (7) comprenant une surface de came (8) coopérant avec ladite partie centrale,
• un organe d'actionnement (9) disposé en extrémité supérieure dudit moyen de déverrouillage, au dessus de ladite surface de came, l'activation dudit organe provoquant un déplacement de ladite surface de came repoussant ladite partie centrale hors dudit cran à l'encontre de l'action élastique desdits bras,
ledit dispositif étant **caractérisé en ce que** ledit organe d'actionnement est activable par un appui vertical exercé vers le bas.

2. Dispositif selon la revendication 1, les bras (6) étant recourbés de sorte à être en appui contre le moyen de réception (12).

3. Dispositif selon la revendication 1 ou 2, le moyen de déverrouillage (7) comprenant en outre, disposé en dessous de la surface de came (8), un patin (10) de glissement contre la tige (2), ledit patin se trouvant en dessous de l'extrémité inférieure de ladite tige lorsque le cran (3) est disposé en regard de la partie centrale (5) du ressort (4) de sorte à permettre, sous l'action des bras (6) dudit ressort, un basculement dudit moyen de déverrouillage entraînant un mouvement en débattement de ladite surface de came, perpendiculairement à ladite tige, permettant un engagement de ladite partie centrale dans ledit cran.

4. Dispositif selon la revendication 3, la gaine comprenant une butée (11) arrêtant le mouvement en débattement de la surface de came (8) une fois la partie centrale (5) engagée dans le cran (3), l'activation de l'organe d'actionnement (9) induisant un coulissement du moyen de déverrouillage (7) contre ladite butée, ladite surface de came repoussant ladite partie centrale hors dudit cran à l'encontre de l'action élastique des bras (6) du ressort (4).
